# EUROPÄISCHE PATENTSCHRIFT

(11) **EP 0 974 781 B1**
(45) Veröffentlichungstag und Bekanntmachung des Hinweises auf die Patenterteilung: **06.10.2004**
(21) Anmeldenummer: 99110567.7
(22) Anmeldetag: 01.06.1999
(51) Int. Cl.: F16L 23/00

(54) **Flanschloses Ventilgehäuse für den Einbau zwischen Flanschen**
Flangeless valve housing to be mounted between flanges
Corps de vanne sans bride destiné à être monté entre des brides

(30) Priorität: 22.07.1998 DE 19832926
(43) Veröffentlichungstag der Anmeldung: 26.01.2000
(73) Patentinhaber: GESTRA GmbH, 28215 Bremen (DE)
(72) Erfinder: Wagner, Jürgen, 27729 Hambergen (DE); Kopa, Michael, 28215 Bremen (DE)
(74) Vertreter: Eisenführ, Speiser & Partner

(56) Entgegenhaltungen:
- DE-A- 2 040 726
- DE-B- 2 258 642
- PROSPEKT 'GESTRA DISCO-RÜCKSCHLAGVENTILE RK71, PN16' AUSGABE 12.86,

## Beschreibung

Die Erfindung betrifft ein flanschloses Ventilgehäuse der im Oberbegriff des Hauptanspruchs spezifizierten Art für den Einbau zwischen Flansche, wobei Zentriermittel vorgesehen sind, die ein gleichachsiges Ausrichten von Ventilgehäuse und Flanschen ermöglichen.

Derartige von der Anmelderin des vorliegenden Patents bspw. unter der Bezeichnung "GESTRA DISCO-Rückschlagventile RK71, PN16" vertriebene flanschlose Ventilgehäuse mit Führungselementen zur peripheren Führung des Verschlußteils finden insbesondere für Ventile Verwendung, deren Verschlußteil vom Druck des durchströmenden Mediums gesteuert wird. - Hierunter fallen beispielsweise Rückschlagventile, Überdruckventile und Unterdruckventile, um nur einige der betroffenen Ventilarten zu nennen. - Die Ventilgehäuse werden vorzugsweise so konzipiert, daß sie zwischen die Flansche verschiedener Nenndrücke und verschiedener Normsysteme eingebaut werden können. - Im Bereich der deutschen Normung (DIN) sind beispielsweise Nenndrücke von PN 6 bis PN 40 besonders gängig. Im Bereich der US Normung (ANSI) sind z. B. Nenndrücke von Class 125 bis Class 300 weit verbreitet. - Bei unterschiedlichen Nenndrücken oder Normsystemen sind trotz gleicher Nennweite die Abmessungen der Flansche unterschiedlich, insbesondere variiert der Durchmesser des Lochkreises für die Schraubenlöcher. Die Positionen der Schraubenlöcher auf dem Lochkreis sind durch Normen festgelegt. Sowohl gegen die senkrechte als auch gegen die waagerechte Mittellinie der Flansche sind die Schraubenlöcher von 4-Loch-Flanschen um 45° und von 8-Loch-Flanschen um 22,5° versetzt angeordnet. Außer den Lochkreisdurchmessem sind auch die Durchmesser der Verbindungsschrauben unterschiedlich. Damit variiert der Zentrierdurchmesser, der durch die in den Schraubenlöchem angeordneten Verbindungsschrauben definiert wird. Die vorgesehenen Zentriermittel kompensieren die Unterschiede der Zentrierdurchmesser und ermöglichen ein gleichachsiges Ausrichten von Ventilgehäuse und Flanschen. Als Zentriermittel für flanschlose Ventilgehäuse sind Zentrierringe bekannt, die außen auf das Ventilgehäuse aufgeschoben werden (DE OS 2 040 726, DE PS 21 60 199). Bei den Führungselementen im Ventilinnenraum kann es sich um separate Bauteile handeln. Deren Einbauposition ist jedoch im Ventilgehäuse vorbestimmt und wird bei eingebautem Ventil stets unverändert beibehalten (DE GM 7 206 517). Weit verbreitet sind ferner flanschlose Ventilgehäuse, die selbst an ihrer Innenwand Führungsrippen aufweisen (DE PS 2 258 642).

Als nachteilig hat sich bei diesen Ventilgehäusen gezeigt daß bei Einbau in waagerechte Rohr leitungen des öfteren erhöhter Verschleiß im Bereich eines Führungselements bzw. am Verschlußteil aufgetreten ist.

Der Erfindung liegt die Aufgabe zugrunde, ein Ventilgehäuse der eingangs genannten Art zu schaffen, das auch bei Einbau in waagerechte Rohrleitungen keinen erhöhten Verschleiß aufweist.

Diese Aufgabe wird durch die im Anspruch 1 angegebenen Merkmale gelöst.

Bei einem Einbau des Ventilgehäuses mit waagerechter Längsachse wird durch die erfindungsgemäße Gestaltung der Zentriernocken und ihre Stellung relativ zu den Führungselementen verhindert, daß innerhalb des vorbestimmten Durchmesserbereiches der Lochkreise eines der Führungselemente auf oder in unmittelbarer Nähe der Senkrechten angeordnet ist, die die gemeinsame Längsachse der Flansche, des Ventilgehäuses und des darin anzuordnenden Verschlußteils schneidet. Das Verschlußteil liegt dann unten mit seinem Gewicht nicht nur auf einem, sondern stets auf zwei mit Abstand rechts und links der Senkrechten befindlichen Führungselementen auf. Bei seiner Öffnungs- und Schließbewegung gleitet das Verschlußteil auf diesen beiden Führungselementen. Erhöhter Verschleiß an dem Verschlußteil oder an den Führungselementen ist dadurch vermieden.

Die Unteransprüche haben vorteilhafte Weiterbildungen der Erfindung zum Gegenstand.

Die Merkmale des Anspruchs 2 bieten beim Einbau des Ventilgehäuses mit waagerechter Längsachse völlige Freiheit, welcher der Zentriernocken beipielsweise nach oben und welcher nach unten weist. In jedem Fall liegen die unteren beiden Führungselemente stets mit ausreichendem Abstand seitlich neben der Senkrechten. Vier Führungselemente haben sich zudem als besonders günstig für die Führung von Verschlußteilen erwiesen.

Einen besonders großen Abstand der jeweils unteren Führungselemente zur Senkrechten hat der Anspruch 3 zum Ziel. Für Ventilgehäuse, die ausschließlich zwischen Flansche mit vier Schraubenlöchem zum Einbau kommen, gibt der Anspruch 4 hierzu weitere vorteilhafte Merkmale an.

Eine besonders vorteihafte Lösung für Ventilgehäuse, die wahlweise zwischen Flansche mit vier Schraubenlöchem oder solche mit acht Schraubenlöchem eingebaut werden sollen, hat der Anspruch 5 zum Gegenstand. Sowohl zur Ausrichtung an den Verbindungsschrauben der Flansche mit vier Schraubenlöchem als auch an denen mit acht Schraubenlöchem sind dieselben Zentriernocken im Einsatz. Bei vier Schraubenlöchem kommt an jeder der vier Verbindungsschrauben ein Zentriernocken zur Anlage. Bei acht Schraubenlöchem kommt hingegen nur an jeder zweiten Verbindungsschraube ein Zentriernocken zur Anlage. Eine im Hinblick auf den seitlichen Versatz der unteren Führungselemente gegenüber der Senkrechten besonders vorteilhafte Gestaltung der Zentriernocken gibt ergänzend der Anspruch 6 an.

Durch die Merkmale des Anspruchs 7 wird erreicht, daß die für ein Ventil notwendigen Kennzeichnungen sich an exponierter Stelle befinden und damit gut ersichtlich sind. Die Merkmale des Anspruches 8 bieten sehr gut zugängliche Befestigungsmittel. Sie können vorteilhaft zur Befestigung eines Erdungsanschlusses genutzt werden, der z. B. unter explositionsgefährdeten Einsatzbedingungen von Nutzen ist. Bei größeren, schwereren Ventilgehäusen können sie zur Aufnahme einer Ringschraube für die Halterung des Ventilgehäuses beim Ein- und Ausbau dienen. Die gemäß Anspruch 9 ebene Ausbildung des Fortsatzes ist günstig für die Anbringung und auch das Lesen der Kennzeichnungen. Andererseits erleichtert sie das Vorsehen der Befestigungsmittel sowie das Anbringen der genannten Teile darin. Die Merkmale des Anspruchs 10 erweisen sich für den Einbau des Ventilgehäuses sowie für die anschließende Ausrichtung als sehr günstig. Bei allen vorbestimmten Flanschen steht ausreichender Einbau- und Ausrichtungsfreiraum zur Verfügung.

Die Erfindung ist mit einem auf das Ventilgehäuse aufzusetzenden Zentrierring realisierbar. Um die Relativstellung der Zentriernocken zu den Führungselemente zu gewährleisten, könnte der Zentrierring beispielsweise mit einem radial nach innen gerichteten Rastzapfen und das Ventilgehäuse an entsprechender Stelle mit einer ihn aufnehmenden Fixierbohrung versehen sein. Besonders vorteilhaft ist es allerdings, wenn das Ventilgehäuse selbst die Zentriernocken aufweist, wie nach Anspruch 11 vorgesehen. Die Anzahl der Teile reduziert sich und die korrekte Relativstellung von Zentriernocken und Führungselementen ist ohne weiteres und bleibend gegeben. Als zusätzlich vorteilhaft erweisen sich die Merkmale des Anspruchs 12. Die Zentriernocken ergeben eine stabile senkrechte Stellung des Ventilgehäuses beim Einbau. Vermieden wird ein seitliches Kippen aus der Senkrechten heraus, wie es bei Verwendung der bekannten schmalen Zentrierringe üblich ist. Außerdem ermöglichen die Zentriernocken und/oder die Fortsätze ein kippsicheres Hochkantlagem der Ventilgehäuse.

Die Merkmale des Anspruchs 13 ergeben besonders große Anschlußflächen des Ventilgehäuses für die Flansche bzw. für die zwischen ihnen und dem Ventilgehäuse in der Regel angeordneten Dichtungen. Für Flansche größeren Lochkreises ist eine größere Anlagefläche vorhanden als für solche mit kleinerem Lochkreis. Die spezifische Flächenpressung ist so auch bei höheren Nenndrücken begrenzt. Eine besonders vorteilhafte Ausführung für Flansche mit vier Schraubenlöchem gibt der Anspruch 14 an. Die bevorzugte Ausführung nach Anspruch 15 ist für Flansche mit alternativ vier oder acht Schraubenlöchern geeignet.

In der Zeichnung sind zwei Ausführungsbeispiele des erfindungsgemäßen Ventilgehäuses dargestellt, eingebaut zwischen Flanschen. Die Fig. 1 - 4 weisen einen anderen Maßstab auf als die Fig. 5 - 8. Es zeigt
- Fig. 1: ein Ventilgehäuse kleiner Nennweite zwischen Flanschen mit 4 Schraubenlöchem auf kleinem Lochkreisdurchmesser, in Ansicht dargestellt,
- Fig. 2: das Ventilgehäuse und einen Flansch aus Fig. 1 im Schnitt 2 - 2,
- Fig. 3: das Ventilgehäuse aus Fig. 1 zwischen Flanschen mit 4 Schraubenlöchern auf großem Lochkreisdurchmesser, in Ansicht dargestellt,
- Fig. 4: das Ventilgehäuse und einen Flansch aus Fig. 3 im Schnitt 4 - 4,
- Fig. 5: ein Ventilgehäuse größerer Nennweite zwischen Flanschen mit 8 Schraubenlöchem auf großem Lochkreisdurchmesser, in Ansicht dargestellt,
- Fig. 6: das Ventilgehäuse und einen Flansch aus Fig. 5 im Schnitt 6 - 6,
- Fig. 7: das Ventilgehäuse aus Fig. 5 sowie einen Flansch mit 8 Schraubenlöchem auf kleinerem Lochkreisdurchmesser und
- Fig. 8: das Ventilgehäuse aus Fig. 5 sowie einen Flansch mit 4 Schraubenlöchem auf noch kleinerem Lochkreisdurchmesser.

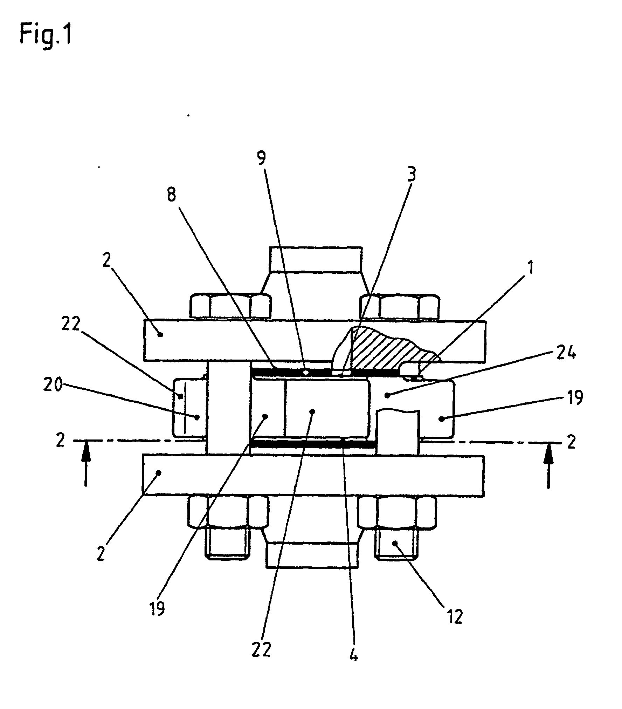

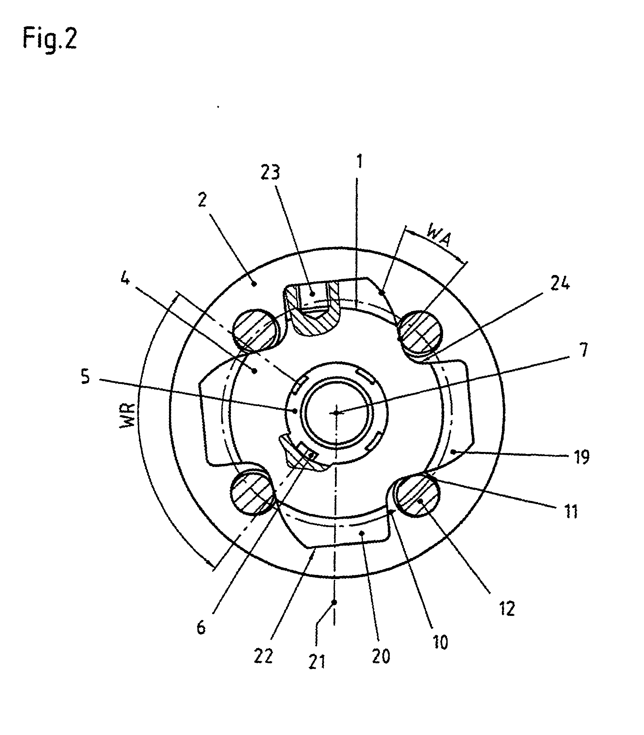

In den Fig. 1 und 2 ist ein flanschloses Ventilgehäuse 1 zwischen zwei Flanschen 2 angeordnet. Das Ventilgehäuse 1 weist an seinem einen Ende eine eintrittsseitige Anschlußstirnfläche 3 und an seinem anderen Ende eine austrittsseitige Anschlußstirnfläche 4 auf. Zwischen seinen beiden Enden weist es einen Innenraum 5 mit vier Führungsrippen 6 auf. Letztere erstrecken sich in Längsrichtung des Ventilgehäuses 1 und sind mit gleichem Abstand zueinander angeordnet. Sie dienen der peripheren, zur Längsachse 7 des Ventilgehäuses 1 gleichachsigen Führung eines im Innenraum 5 hubbeweglich anzuordnenden Verschlußteils (nicht dargestellt). Zwischen den Anschlußstirnflächen 3, 4 des Ventilgehäuses 1 und den Dichtflächen 8 der Flansche 2 sind Dichtungen 9 angeordnet. Das Ventilgehäuse 1 und die Flansche 2 sind von gleicher kleiner Nennweite. Klein ist auch der Durchmesser eines mit den Flanschen 2 achsgleichen Lochkreises 10, auf dem sie vier in gleichem Abstand angeordnete Schraubenlöcher 11 für vier Verbindungsschrauben 12 aufweisen. Entsprechend klein sind auch die Außendurchmesser der Dichtflächen 8 und der Dichtungen 9. - Bei den Flanschen 2 kann es sich beispielsweise um solche nach deutscher Norm für den Nenndruck 6 in der Nennweite 15 handeln.

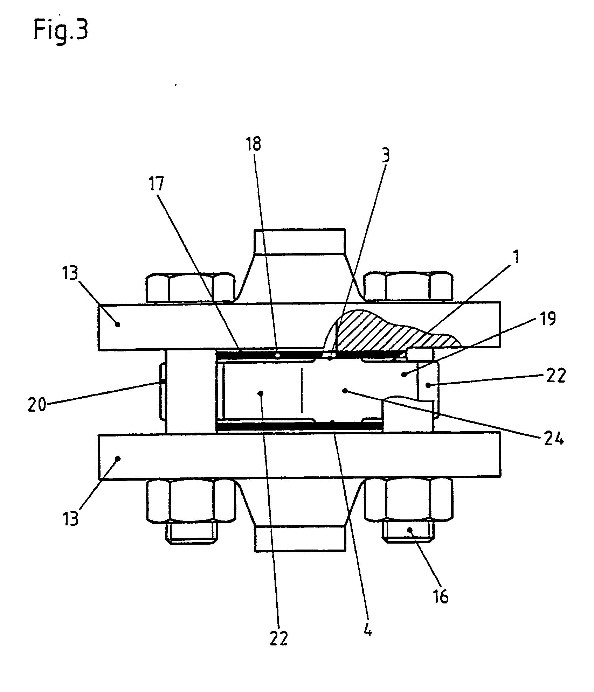

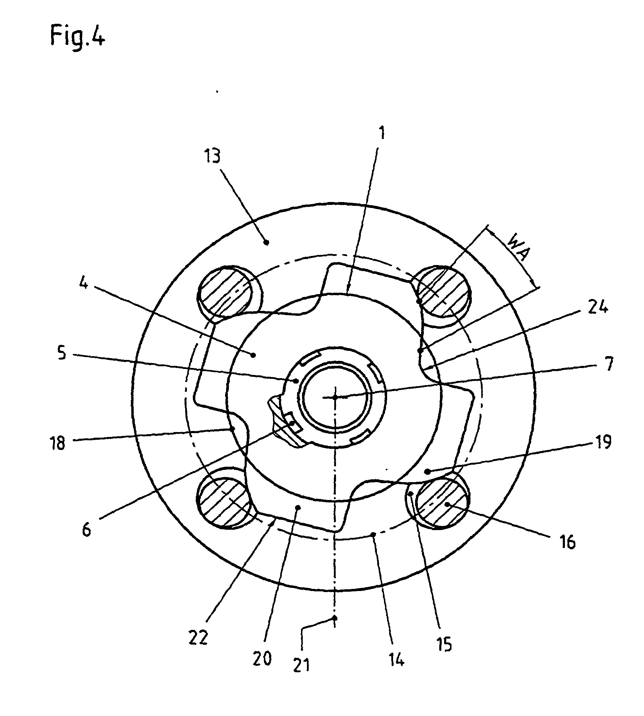

In den Fig. 3 und 4 ist das gleiche Ventilgehäuse 1 zwischen zwei Flanschen 13 mit einem deutlich größeren Lochkreis 14 für vier Schraubenlöcher 15 und vier Verbindungsschrauben 16 angeordnet Entsprechend groß sind dort auch die Außendurchmesser der Dichtflächen 17 und der Dichtungen 18. - Die Flansche 13 können z. B. nach japanischer Norm sein, für den Nenndruck 10 in der Nennweite 15. Das klein" und groß" der Durchmesser bezieht sich also jeweils auf Flansche gleicher Nennweite, aber für unterschiedliche Nenndrücke oder nach unterschiedlichen Normsystemen.

Außen an seinem Umfang weist das Ventilgehäuse 1 mit gleichem Abstand zueinander vier radiale Zentriernocken 19 auf. Deren Breite erstreckt sich nahezu über die gesamte Länge des scheibenförmigen Ventilgehäuses 1. Der niedrige Nockenbereich der Zentriernocken 19 hat einen solchen radialen Abstand zur Längsachse 7 des Ventilgehäuses 1, daß er an den Verbindungsschrauben 12 der Flansche 2 zur Anlage gebracht werden kann. Die Flansche 2 weisen den kleinsten Lochkreis 10 aus einem vorbestimmten Durchmesserbereich auf (Fig. 1, 2). Der radiale Abstand des hohen Nockenbereichs zur Längsachse 7 ist so groß, daß er an den Verbindungsschrauben 16 der Flansche 13 zur Anlage kommen kann. Diese weisen den größten Lochkreis 14 aus einem vorbestimmten Durchmesserbereich auf (Fig. 3, 4). Die Zentriernocken 19 steigen von ihrem niedrigsten zu ihrem höchsten Nockenbereich stetig an. An seine größte Nockenhöhe anschließend weist jeder Zentriernocken 19 einen sich in Umfangsrichtung des Ventilgehäuses 1 erstreckenden Fortsatz 20 auf. Zwischen dem Ende des Fortsatzes 20 und dem nachfolgenden Zentriernocken 19 besteht in Umfangsrichtung ein Freiraum. Der Abstand vom Fortsatz 20 bis zu dem nachfolgenden Nockenbereich für den kleinsten vorbestimmten Lochkreisdurchmesser übersteigt den Halbmesser der Schraubenlöcher 11, so daß für das Ausrichten von Ventilgehäuse 1 und Flanschen 2 entsprechend Freiraum verbleibt (Fig. 2).

Jeder der Zentriernocken 19 erstreckt sich mit seinem der Ausrichtung dienenden Bereich über einen Umfangswinkel WA des Ventilgehäuses 1, der nur einen Bruchteil des Abstandswinkels WR der Führungsrippen 6 beträgt. Im vorliegenden Fall übersteigt er ein Viertel des Abstandswinkels WR nicht. Der Umfangswinkel WA umfaßt den Nockenbereich vom kleinsten (Fig. 2) bis zum größten (Fig. 4) vorbestimmten Lochkreisdurchmesser. Die niedrigen Nockenbereiche der Zentriernocken 19 sind dabei am Umfang des Ventilgehäuse 1 so im Bereich der Führungsrippen 6 angeordnet, daß sich bei waagerechter Längsachse 7 nach dem Ausrichten innerhalb des vorbestimmten Bereichs von Lochkreisdurchmessem die Führungsrippen 6 mit seitlichem Abstand beiderseits einer durch die Längsachse 7 gelegten Senkrechten 21 befinden (Fig. 2 und 4). Dieser seitliche Abstand ist so groß, daß das Verschlußteil bei seiner Öffnungs- und Schließbewegung unten stets auf zwei Führungsrippen 6 gleitet, nicht nur auf einer. Verschleiß ist dadurch vorgebeugt

Das Ausrichten geschieht in der Weise, daß während des Einbaus zwischen die Flansche 2; 13 das Ventilgehäuse 1 soweit gedreht wird, bis die Zentriernocken 19 an den Verbindungsschrauben 12; 16 zur Anlage kommen und diese ihrerseits sich in den Schraubenlöchem 11 radial nach außen an die Flansche 2; 13 anlegen. Das Ventilgehäuse 1 und die Flansche 2; 13 sind damit gleichachsig zueinander ausgerichtet. Nach dem Anziehen der Verbindungsschrauben 12; 16 ist das Ventilgehäuse 1 gleichachsig zwischen den Flanschen 2; 13 eingeklemmt.

Wie die Zentriernocken 19, so erstrecken sich auch die Fortsätze 20 in ihrer Breite über nahezu die gesamte Gehäuselänge. Ihre radial nach außen weisende Fläche 22 ist eben ausgebildet. Einer der Fortsätze 20 weist in seiner Fläche 22 eine im wesentlichen radial zum Ventilgehäuse 1 angeordnete Aufnahmebohrung 23 als Befestigungsmittel zur Anbringung eines elektrischen Erdungsanschlusses (nicht dargestellt) auf. Da die Fortsätze 20 radial aus dem Ventilgehäuse 1 hervorkragen, führt die Aufnahmebohrungen 23 zu keiner Schwächung der Wandung des Ventilgehäuses 1. Die Flächen 22 der übrigen Fortsätze 20 dienen der Aufnahme von Kennzeichnungen, wie z. B. Herstellerangabe, zulässige Betriebsdaten und dergleichen (nicht dargestellt). Die in radialer Richtung exponierte Position sowie die ebene Gestaltung der Flächen 22 erleichtern das Anbringen der Kennzeichnung und insbesondere auch das Lesen an dem zwischen Flanschen 2; 13 eingebauten Ventilgehäuse 1. Die - bezogen auf die Gehäuselänge - mittige Anordnung und große Breite der Flächen 22 und der Zentriernocken 19 bieten gute Auflagemöglichkeiten für ein "hochkant" stehendes Ventilgehäuse 1, d. h. seine Längsachse 7 ist waagerecht Sie verhindern dadurch ein Kippen des scheibenförmigen, kurzbauenden Ventilgehäuses 1 während der Lagerung wie auch während des Einbaus.

Der Außendurchmesser des Ventilgehäuses 1 - in den Fig. 2 und 4 weist das Bezugszeichen 1 auf den Außendurchmesser - und seiner Anschlußstirnflächen 3, 4 entspricht in den Fig. 1 - 4 dem größten Außendurchmesser der Dichtflächen 17 der Flansche 13 zwischen die das Ventilgehäuse 1 einbaubar sein soll, d. h. dem größten Dichtflächendurchmesser aller Nenndrücke und Normsysteme für die das Ventilgehäuse 1 vorgesehen ist. Im niedrigen Bereich der Zentriernocken 19 sind, deren Verlauf entsprechend, im Außendurchmesser des Ventilgehäuses 1 rinnenartige Vertiefungen 24 über die gesamte Gehäuselänge vorgesehen. Die Verbindungsschrauben 12 von Flanschen 2 mit kleinem Lochkreisdurchmesser erstecken sich durch die vier Vertiefungen 24 (Fig. 1, 2). Andererseits bieten die Anschlußstirnflächen 3, 4 große Anlageflächen für Dichtungen 18 großen Durchmessers, wie sie zwischen Flanschen 13 mit großem Lochkreisdurchmesser gebräuchlich sind (Fig. 3, 4), was die Flächenpressung vermindert. Die partielle Reduzierung der Anlageflächen durch die Vertiefungen 24 stellt dabei keine Beeinträchtigung dar.

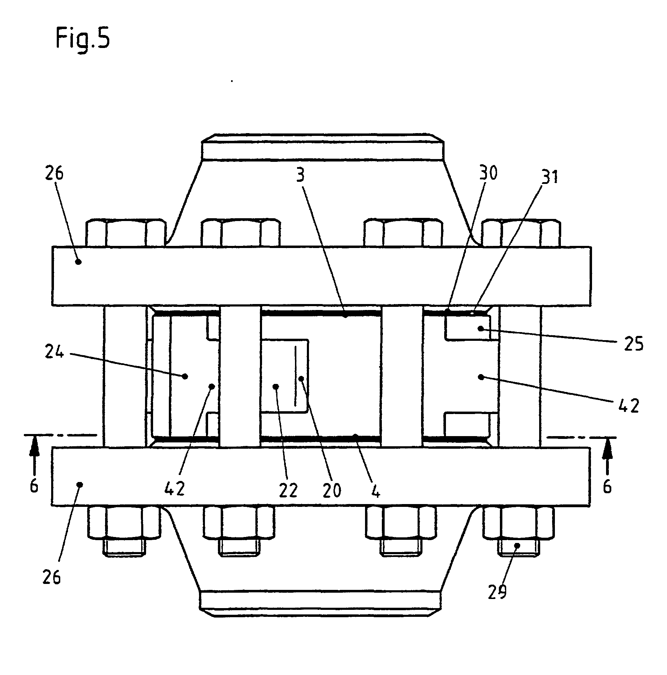

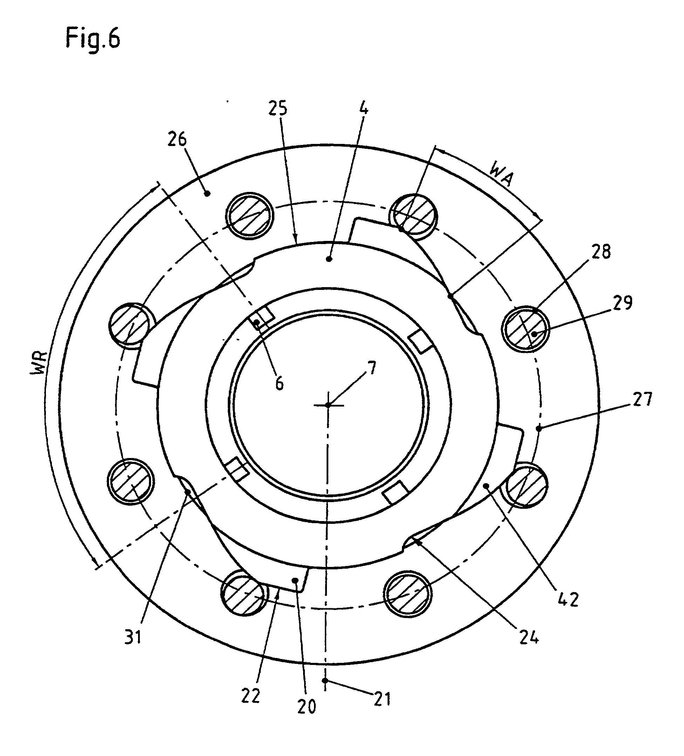

In den Fig. 5 und 6 ist ein flanschloses Ventilgehäuse 25 größerer Nennweite zwischen zwei Flanschen 26 angeordnet. Das Ventilgehäuse 25 und die Flansche 26 haben die gleiche Nennweite. Auf einem Lochkreis 27 weisen die Flansche 26 mit gleichem Abstand acht Schraubenlöcher 28 für acht Verbindungsschrauben 29 auf. In Relation zur Nennweite sind der Lochkreis 27 sowie die Außendurchmesser der Dichtflächen 30 der Flansche 26 und der Dichtungen 31 groß. - Bei den Flanschen 26 kann es sich z. B. um solche nach US Norm für den Nenndruck Class 300 in der Nennweite 4" handeln.

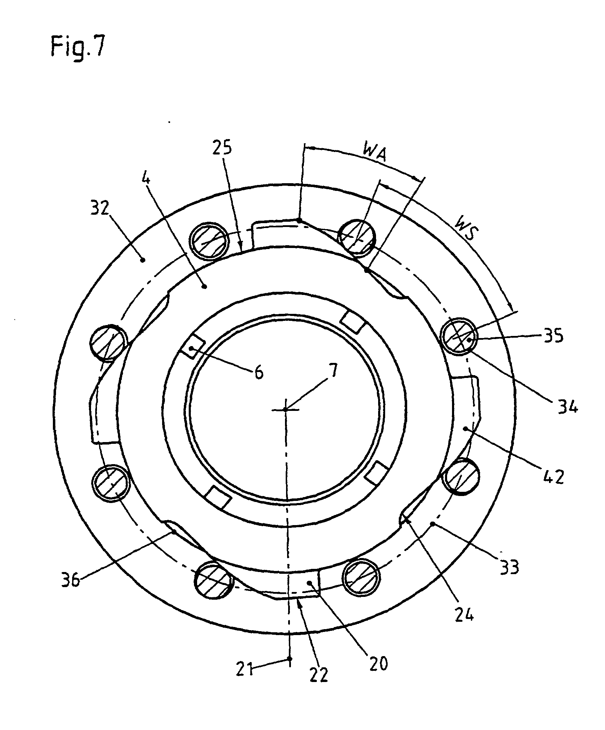

Das gleiche Ventilgehäuse 25 ist in Fig. 7 mit einem Flansch 32 gleicher Nennweite, jedoch kleinerem Lochkreis 33 gezeigt. Auch dieser Flansch 32 weist acht Schraubenlöcher 34 für acht Verbindungsschrauben 35 auf. Die Durchmesser der Dichtfläche des Flansches 32 und der Dichtung 36 sind deutlich kleiner als jene der Flansche nach Fig. 5, 6. - Bei dem Flansch 32 kann es sich beispielsweise um einen nach deutscher Norm für den Nenndruck 16 in der Nennweite 100 handeln.

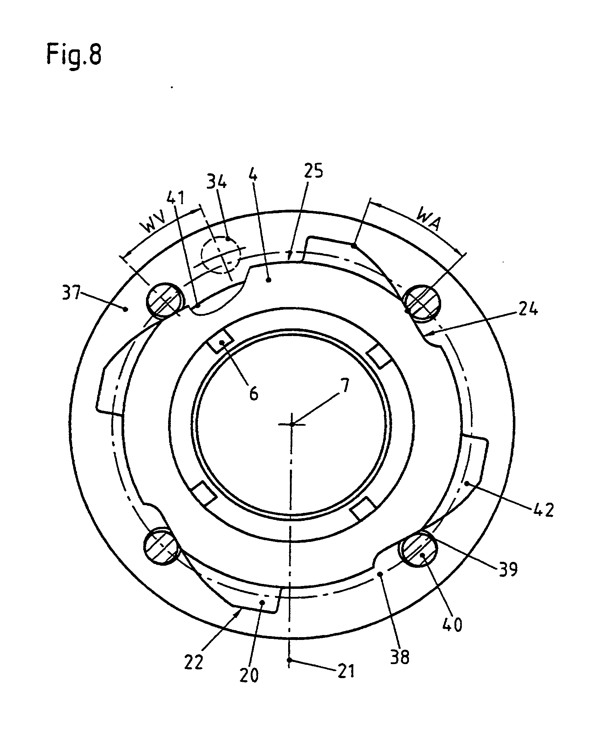

In Fig. 8 ist das gleiche Ventilgehäuse 25 schließlich mit einem Flansch 37 gleicher Nennweite, jedoch noch kleinerem Lochkreis 38 gezeigt. Dieser Flansch 37 weist lediglich vier in gleichem Abstand angeordnete Schraubenlöcher 39 für vier Verbindungsschrauben 40 auf. Die Durchmesser der Dichtfläche des Flansches 37 und der Dichtung 41 sind nicht nur kleiner als jene der Flansche nach Fig. 5, 6, sondern auch kleiner als jene nach Fig. 7. - Bei dem Flansch 37 kann es sich beispielsweise um einen nach deutscher Norm für den Nenndruck 6 in der Nennweite 100 handeln.

Auch das Ventilgehäuse 25 weist außen an seinem Umfang vier mit gleichem Abstand zueinander angeordnete radiale Zentriernocken 42 mit sich anschließendem Fortsatz 20 auf. Der niedrige Nockenbereich der Zentriernocken 42 hat einen solchen radialen Abstand zur Längsachse 7 des Ventilgehäuses 25, daß er an den Verbindungsschrauben 40 des Flanschen 37 zur Anlage gebracht werden kann, der den kleinsten Lochkreis 38 aus einem vorbestimmten Durchmesser bereich aufweist (Fig. 8). Der radiale Abstand des hohen Nockenbereichs zur Längsachse 7 ist hingegen so groß, daß dieser Nockenbereich an den Verbindungsschrauben 29 der Flansche 26 zur Anlage kommen kann, die den größten Lochkreis 27 aus einem vorbestimmten Durchmesserbereich aufweisen (Fig. 5, 6). Von ihrem niedrigsten zu ihrem höchsten Nockenbereich steigen die Zentriernocken 42 stetig an. Zwischen dem Ende des Fortsatzes 20 eines Zentriernockens 42 und dem in Umfangsrichtung nachfolgenden Zentriernocken 42 besteht ein Freiraum. Der Abstand vom Fortsatz 20 bis zum nachfolgenden Nockenbereich für den kleinsten vorbestimmten Lochkreis 33 der Flansche 32 mit acht Schraubenlöchem 34 (Fig. 7) übersteigt den Abstandswinkel WS zwischen zwei benachbarten Schraubenlöcher 34 zuzüglich des Halbmessers eines Schraubenloches 34.

Jeder der Zentriernocken 42 erstreckt sich mit seinem der Ausrichtung dienenden Bereich über einen Umfangswinkel WA des Ventilgehäuses 1, der größer ist als der Versatzwinkel WV zwischen einem Schraubenloch eines Flansches mit acht Schraubenlöchem (Schraubenloch 34 zur Veranschaulichung in Fig. 8 in Strichpunkt-Linie angedeutet) und dem nächstgelegenen Schraubenloch 39 eines Flansches 37 mit vier Schraubenlöchern. Der Umfangswinkel WA umfaßt den Nockenbereich vom kleinsten (Fig. 8) bis zum größten (Fig. 6) der vorbestimmten Lochkreisdurchmesser. Die niedrigen Nockenbereiche der Zentriernocken 42 sind dabei am Umang des Ventilgehäuses 25 so im Bereich der Führungsrippen 6 angeordnet, daß sich bei waagerechter Längsachse 7 nach erfolgtem Ausrichten innerhalb des vorbestimmten Bereiches von Lochkreisdurchmessem die Führungsrippen 6 mit seitlichem Abstand beiderseits einer durch die Längsachse 7 gelegten Senkrechten 21 befinden. Hierzu wird beim Einbau das hohe Ende eines der vier Zentriernocken 42 zwischen den beiden obersten der Verbindungsschrauben 29; 35; 40 positioniert (Fig. 6 - 8). Somit gleitet auch bei dem Ventilgehäuse 25 größerer Nennweite bei Einbau mit waagerechter Längsachse 7 und einem nach oben weisenden Zentriernocken 42 das Verschlußteil bei seiner Öffnungs- und Schließbewegung unten stets auf zwei Führungsrippen 6, nicht nur auf einer, was Verschleiß entgegenwirkt.

Zur gleichachsigen Ausrichtung wird das Ventilgehäuse 25 zwischen den beidseitig vorhandenen Flanschen 26; 32; 37 soweit gedreht, daß jeder der vier Zentriernocken 42 an einer Verbindungsschraube 29; 35; 40 der Flansche 26; 32; 37 zur Anlage kommt. Während bei Flanschen 37 mit nur vier Verbindungsschrauben 40 an jeder von diesen ein Zentriernocken 42 anliegt (Fig. 8), kommt bei Flanschen 26; 32 mit acht Verbindungsschrauben 29; 35 nur an jeder zweiten ein Zentriernocken 42 zur Anlage. Die vier freibleibenden Verbindungsschrauben 29, 35 befinden sich dabei in dem Freiraum zwischen den Zentriernocken 42 (Fig. 5 - 7). Dazu ist der Außendurchmesser des Ventilgehäuses 25 - in den Fig. 6 - 8 weist das Bezugszeichen 25 auf den Außendurchmesser - und seiner Anschlußstirnflächen 3, 4 ist etwas kleiner als der kleinste vorbestimmte Lochkreis der Flansche mit acht Schraubenlöchem abzüglich dem Durchmesser dieser Schraubenlöcher. Im Bereich des freien Abstandes zwischen den Zentriernocken 42 existiert so der notwendige Freiraum für die vier freibleibenden Verbindungsschrauben 29; 35. Dennoch ist eine große Anlagefläche für die Dichtungen 31; 36 mit großem Außendurchmesser vorhanden.

Der Außendurchmesser des Ventilgehäuses 25 ist größer als der kleinste vorbestimmte Lochkreis 38 der Flansche 37 mit vier Schraubenlöcher 39 abzüglich dem Durchmesser eines Schraubenloches 39. Im niedrigen Bereich der Zentriernocken 42 sind, deren Verlauf entsprechend, im Außendurchmesser des Ventilgehäuses 25 rinnenartige Vertiefungen 24 über die gesamte Gehäuselänge für die Verbindungsschrauben 40 der Flansche 37 mit vier Schraubenlöchem 39 und dem kleinsten vorbestimmten Lochkreis 38 vorgesehen.

Das für das Ventilgehäuse 1 mit kleiner Nennweite zu den Fortsätzen 20 Ausgeführte gilt für das Ventilgehäuse 25 mit größerer Nennweite in gleicher Weise. Im übrigen sind für die Fortsätze 20 und Zentriernocken 19, 42 Alternativlösungen denkbar, ungeachtet der Nennweite. Die Zentrier nocken 19, 42 könnten beispielsweise durch zwei schmale, mit Abstand nebeneinander angeordnete Nockenkufen gebildet werden. Auch könnten die Zentriernocken 19, 42 selbst schmaler ausgeführt werden, während die Fortsätze 20 breit gestaltet werden, so daß beispielsweise hinreichend Platz für Kennzeichnungen sowie für eine kippsichere Hochkantlagerung verfügbar ist. Statt rechtwinklig zur Mittellinie des Ventilgehäuses 1, 25 könnten die Flächen 22 der Fortsätze 20 alternaiv als Schräge zwischen dem hohen Nockenende und dem Außendurchmesser des Ventilgehäuses 1, 25 ausgebildet werden.

Wenngleich in den Zeichnungen nur Flansche mit vier oder acht Schraubenlöchem gezeigt sind, ist die Erfindung selbstverständlich auch für Flansche mit noch größeren Anzahl von Schraubenlöchem geeignet.

### Bezugszeichenliste:

- 1: Ventilgehäuse
- 2: Flansch
- 3,4: Anschlußstirnfläche
- 5: Innenraum
- 6: Führungsrippe
- 7: Längsachse
- 8: Dichtfläche
- 9: Dichtung
- 10: Lochkreis
- 11: Schraubenloch
- 12: Verbindungsschraube
- 13: Flansch
- 14: Lochkreis
- 15: Schraubenloch
- 16: Verbindungsschraube
- 17: Dichtfläche
- 18: Dichtung
- 19: Zentriernocken
- 20: Fortsatz
- 21: Senkrechte
- 22: Fläche
- 23: Aufnahmebohrung
- 24: Vertiefungen
- 25: Ventilgehäuse
- 26: Flansch
- 27: Lochkreis
- 28: Schraubenloch
- 29: Verbindungsschraube
- 30: Dichtfläche
- 31: Dichtung
- 32: Flansch
- 33: Lochkreis
- 34: Schraubenloch
- 35: Verbindungsschraube
- 36: Dichtung
- 37: Flansch
- 38: Lochkreis
- 39: Schraubenloch
- 40: Verbindungsschraube
- 41: Dichtung
- 42: Zentriernocken

- WA: Umfangswinkel des Ausrichtungsbereichs
- WR: Abstandwinkel der Führungsrippen
- WS: Abstandswinkel der Schraubenlöcher
- WV: Versatzwinkel der Schraubenlöcher

## Patentansprüche

1. Flanschloses Ventilgehäuse für den Einbau zwischen zwei Flansche (2; 13; 26; 32; 37), die auf einem Lochkreis (10; 14; 27; 33; 38) angeordnete Schraubenlöcher (11; 15; 28; 34; 39) für Verbindungsschrauben (12; 16; 29; 35; 40) aufweisen, wobei der Lochkreis (10; 14; 27; 33; 38) einen Durchmesser aufweist, der innehalb eines Bereichs von einem kleinsten bis zu einem größten vorbestimmten Durchmesser liegt, und wobei das Ventilgehäuse (1; 25)
- an seinen beiden Enden Anschlussstirnflächen (3, 4) und dazwischen einen Innenraum (5) aufweist und
- in dem Innenraum (5) ortsfest mehrere sich in Längsrichtung des Ventilgehäuses (1; 25) erstreckende Führungselemente (6) zur peripheren Führung eines Verschlussteils angeordnet sind, wobei
- am Ventilgehäuseumfang Zentriermittel (19; 42) mit einer der Anzahl der Verbindungsschrauben (12; 16; 29; 35; 40) angepassten Anzahl radialer Zentriernocken (19; 42) angeordnet sind, wobei das Ventilgehäuse (1; 25) derart drehbar ist, dass diese Zentriernocken (19; 42) an den Verbindungsschrauben (12; 16; 29; 35; 40) zur Anlage bringbar und dadurch das Ventilgehäuse (1; 25) und die Flansche (2; 13; 26; 32; 37) gleichachsig ausrichtbar sind,
**dadurch gekennzeichnet, dass**
- die Zentriernocken (19; 42) so ausgebildet sind, dass das Ventilgehäuse (1; 25) und die Flansche (2; 13; 26; 32; 37) für den Bereich vom kleinsten bis zum größten vorbestimmten Durchmesser des Lochkreises (10; 14; 27; 33; 38) durch eine derartige Drehung (WA) des Ventilgehäuses (1; 25) gleichachsig ausrichtbar sind, die nur einen Teil des in Drehrichtung bestehenden Abstandes (WR) benachbarter Führungselemente (6) beträgt, und
- die Zentriermittel (19; 42) in einer solchen Stellung relativ zu den Führungselementen (6) am Ventilgehäuse (1; 25) fixiert sind, dass das Ventilgehäuse (1; 25) derart mit waagerechter Längsachse (7) und gleichachsiger Ausrichtung des Ventilgehäuses (1; 25) und der Flansche (2; 13; 26; 32; 37) zwischen die Flansche (2; 13; 26; 32; 37) einbaubar ist, dass die Führungselemente (6) einen solchen seitlichen Abstand zu einer die Längsachse (7) schneidenden Senkrechten (21) aufweisen, dass mindestens zwei Führungselemente (6) das Verschlussteil unten führen.

2. Flanschloses Ventilgehäuse nach Anspruch 1, **dadurch gekennzeichnet, dass** vier mit gleichem Abstand zueinander angeordnete Führungselemente (6) und vier mit gleichem Abstand zueinander angeordnete Zentriernocken (19; 42) vorgesehen sind, wobei sich die niedrigen Nockenenden im Bereich der Führungselemente (6) befinden.

3. Flanschloses Ventilgehäuse nach einem der Ansprüche 1 und 2, **dadurch gekennzeichnet, dass** der der Ausrichtung dienende Bereich der Zentriernocken (19; 42) sich jeweils über einen Umfangswinkel (WA) des Ventilgehäuses (1; 25) erstreckt, der einen Bruchteil des Abstandswinkels (WR) der Führungselemente (6) beträgt.

4. Flanschloses Ventilgehäuse nach Anspruch 3 für vorbestimmte Flansche mit vier Schraubenlöchern, **dadurch gekennzeichnet, dass** der der Ausrichtung dienende Nockenbereich der Zentriernocken (19) sich jeweils über einen Umfangswinkel (WA) des Ventilgehäuses (1) erstreckt, der ein Viertel des Abstandswinkels (WR) der Führungselemente (6) nicht übersteigt.

5. Flanschloses Ventilgehäuse nach Anspruch 3 für vorbestimmte Flansche, die alternativ vier oder acht Schraubenlöcher aufweisen, **dadurch gekennzeichnet, dass**
sich bei Einbau mit waagerechter Längsachse (7) das hohe Ende eines Zentriernockens (42) zwischen den obersten beiden Verbindungsschrauben (29; 35; 40) befindet und
der der Ausrichtung dienende Nockenbereich der Zentriernocken (42) sowohl zur Ausrichtung an einer Verbindungsschraube (40) eines Flansches (37) mit vier Schraubenlöchern (39) als auch an einer Verbindungsschraube (29; 35) eines Flansches (26; 32) mit acht Schraubenlöchern (28; 34) ausgebildet sind.

6. Flanschloses Ventilgehäuse nach Anspruch 5, **dadurch gekennzeichnet, dass** der der Ausrichtung dienende Nockenbereich der Zentriernocken (42) sich jeweils über einen Umfangswinkel (WA) des Ventilgehäuses (25) erstreckt, der größer ist als der Versatzwinkel (WV) zwischen dem Schraubenloch (39) eines Flansches (37) mit vier Schraubenlöchern (39) und dem nächstgelegenen Schraubenloch (28; 34) eines Flansches (26; 32) mit acht Schraubenlöchern (28; 34).

7. Flanschloses Ventilgehäuse nach einem oder mehreren der vorhergehenden Ansprüche, **dadurch gekennzeichnet, dass** mindestens ein Zentriernocken (19; 42) einen sich an die größte Nockenhöhe in Umfangsrichtung des Ventilgehäuses (1; 25) anschließenden Fortsatz (20) mit einer in radiale Richtung des Ventilgehäuses (1; 25) weisenden Fläche (22) aufweist.

8. Flanschloses Ventilgehäuse nach einem oder mehreren der vorhergehenden Ansprüche, **dadurch gekennzeichnet, dass** mindestens ein Zentriernocken (19; 42) einen sich an die größte Nockenhöhe in Umfangsrichtung des Ventilgehäuses (1; 25) anschließenden Fortsatz (20) mit im wesentlichen radial zum Ventilgehäuse (1; 25) angeordneten Befestigungsmitteln (23) für einen Erdungsanschluss und/oder für Einbauhilfen aufweist.

9. Flanschloses Ventilgehäuse nach einem oder beiden der Ansprüche 7 und 8, **dadurch gekennzeichnet, dass** die Fläche (22) des Fortsatzes (20) eben ausgebildet ist.

10. Flanschloses Ventilgehäuse nach einem der Ansprüche 7 bis 9, **dadurch gekennzeichnet, dass** die Zentriernocken (19; 42) einschließlich Fortsatz (20) mit einem Abstand zueinander angeordnet sind, der größer ist als der Abstandswinkel (WS) zweier benachbarter Schraubenlöcher (28; 34) eines Flansches (26; 32) mit acht Schraubenlöchern (28; 34) zuzüglich des Halbmessers eines Schraubenloches (28; 34).

11. Flanschloses Ventilgehäuse nach einem oder mehreren der vorhergehenden Ansprüche, **dadurch gekennzeichnet, dass** das Ventilgehäuse (1; 25) selbst die Zentriernocken (19; 42) aufweist.

12. Flanschloses Ventilgehäuse nach Anspruch 11, **dadurch gekennzeichnet, dass**
das Ventilgehäuse (1; 25) scheibenförmig ausgebildet ist und
die Zentriernocken (19; 42) und/oder die Fortsätze (20) mittig am Ventilgehäuse (1; 25) angeordnet sind sowie eine Breite aufweisen, die eine kippsichere Auflage bietet.

13. Flanschloses Ventilgehäuse nach Anspruch 11 oder 12, **dadurch gekennzeichnet, dass** der Außendurchmesser des Ventilgehäuses (1; 25) größer ist als der Außendurchmesser der Dichtfläche (8) eines Flansches (2; 37) mit dem kleinsten vorbestimmten Lochkreis (10; 38) und
das Ventilgehäuse (1; 25) in seinem Außendurchmesser im Bereich der Zentriernocken (19; 42) längsrinnenartige Vertiefungen (24) für die Verbindungsschrauben (12; 40) der Flansche (2; 37) mit kleinem vorbestimmten Lochkreis (10; 38) aufweist.

14. Flanschloses Ventilgehäuse nach Anspruch 13 für vorbestimmte Flansche mit vier Schraubenlöchern, **dadurch gekennzeichnet, dass** der Außendurchmesser des Ventilgehäuses (1) dem Außendurchmesser der Dichtfläche (17) des Flansches (13) mit dem größten vorbestimmten Lochkreis (14) entspricht.

15. Flanschloses Ventilgehäuse nach Anspruch 13 für vorbestimmte Flansche, die alternativ vier oder acht Schraubenlöcher aufweisen, **dadurch gekennzeichnet, dass** der Außendurchmesser des Ventilgehäuses (1) kleiner ist als der kleinste Lochkreisdurchmesser der Flansche (26; 32) mit acht Schraubenlöchern (28; 34) abzüglich des Schraubenlochdurchmessers.

## Claims

1. Flangeless valve housing for fitting between two flanges (2; 13; 26; 32; 37) which comprise screw holes (11; 15; 28; 34; 39), arranged on a hole circle (10; 14; 27; 33; 38), for connecting screws (12; 16; 29; 35; 40), the hole circle (10; 14; 27; 33; 38) having a diameter which lies within a range from a smallest to a largest predetermined diameter, wherein the valve housing (1; 25)
- comprises connecting end faces (3, 4) at its two ends and has an inner space (5) therebetween and
- a plurality of guide elements (6) extending in the longitudinal direction of the valve housing (1; 25) for the peripheral guidance of a closure piece are fixedly arranged in the inner space (5),
- centring means (19; 42) with a number of radial centring cams (19; 42) matched to the number of connecting screws (12; 16; 29; 35; 40) are arranged on the periphery of the valve housing, wherein the valve housing (1; 25) can be rotated such that these centring cams (19; 42) can be brought to rest on the connecting screws (12; 16; 29; 35; 40) and as a result the valve housing (1; 25) and the flanges (2; 13; 26; 32; 37) can be aligned coaxially,
**characterised in that**
- the centring cams (19; 42) are constructed in such a way that the valve housing (1; 25) and the flanges (2; 13; 26; 32; 37) can be coaxially aligned for the range from the smallest to the largest predetermined diameter of the hole circle (10; 14; 27; 33; 38) by a rotation (WA) of the valve housing (1; 25) which is only a fraction of the spacing (WR) of adjacent guide elements (6) in the direction of rotation, and
- the centring means (19; 42) are fixed to the valve housing (1; 25) in such a position relative to the guide elements (6) that the valve housing can be fitted between the flanges (2; 13; 26; 32; 37) in such a way with horizontal longitudinal axis (7) and coaxial alignment of the valve housing (1; 25) and of the flanges (2; 13; 26; 32; 37) that the guide elements (6) have a lateral spacing from a perpendicular (21) cutting the longitudinal axis (7) such that at least two guide elements (6) guide the closure piece downwards.

2. Flangeless valve housing according to claim 1, **characterised in that** four equidistant guide elements (6) and four equidistant centring cams (19; 42) are provided, the low cam ends being located in the region of the guide elements (6).

3. Flangeless valve housing according to either claim 1 or claim 2, **characterised in that** the region of the centring cams (19; 42) used for alignment extends in each case over a circumferential angle (WA) of the valve housing (1; 25) which is a fraction of the spacing angle (WR) of the guide elements (6).

4. Flangeless valve housing according to claim 3 for predetermined flanges comprising four screw holes, **characterised in that** the cam region of the centring cams (19) used for alignment extends in each case over a circumferential angle (WA) of the valve housing (1) which does not exceed one quarter of the spacing angle (WR) of the guide elements (6).

5. Flangeless valve housing according to claim 3 for predetermined flanges which alternately comprise four or eight screw holes, **characterised in that** on fitting with horizontal longitudinal axis (7), the high end of a centring cam (42) is located between the upper two connecting screws (29; 35; 40) and the cam region of the centring cams (42) used for alignment is constructed for alignment at a connecting screw (40) of a flange (37) with four screw holes (39) and at a connecting screw (29; 35) of a flange (26; 32) with eight screw holes (28; 34).

6. Flangeless valve housing according to claim 5, **characterised in that** the cam region of the centring cam (42) used for alignment extends in each case over a circumferential angle (WA) of the valve housing (25) which is larger than the angle of misalignment (WV) between the screw hole (39) of a flange (37) with four screw holes (39) and the next screw hole (28; 34) of a flange (26; 32) with eight screw holes (28; 34).

7. Flangeless valve housing according to any one or more of the preceding claims, **characterised in that** at least one centring cam (19; 42) comprises a projection (20), adjoining the greatest cam height in the circumferential direction of the valve housing (1; 25), with a face (22) pointing in the radial direction of the valve housing (1; 25).

8. Flangeless valve housing according to any one or more of the preceding claims, **characterised in that** at least one centring cam (19; 42) comprises a projection (20), adjoining the greatest cam height in the circumferential direction of the valve housing (1; 25), with fastening means (23) for an earth connection and/or fitting aids, arranged substantially radially with respect to the valve housing (1; 25).

9. Flangeless valve housing according to one or both of claims 7 and 8, **characterised in that** the face (22) of the projection (20) is flat.

10. Flangeless valve housing according to any one of claims 7 to 9, **characterised in that** the centring cams (19; 42), including projection (20), are arranged at a spacing from each other which is greater than the spacing angle (WS) of two adjacent screw holes (28; 34) of a flange (26; 32) with eight screw holes (28; 34) plus the radius of a screw hole (28; 34).

11. Flangeless valve housing according to any one or more of the preceding claims, **characterised in that** the valve housing (1; 25) itself comprises the centring cams (19; 42).

12. Flangeless valve housing according to claim 11, **characterised in that** the valve housing (1; 25) is constructed so as to be disc-shaped and the centring cams (19; 42) and/or the projections (20) are arranged centrally on the valve housing (1; 25) and have a width providing tilt-resistant support.

13. Flangeless valve housing according to either claim 11 or claim 12, **characterised in that** the external diameter of the valve housing (1; 25) is greater than the external diameter of the sealing face (8) of a flange (2; 37) with the smallest predetermined hole circle (10; 38), and the valve housing (1; 25), in its external diameter, in the region of the centring cams (19; 42), comprises longitudinal channel-like indentations (24) for the connecting screws (12; 40) of the flanges (2; 37) with a small predetermined hole circle (10; 38).

14. Flangeless valve housing according to claim 13 for predetermined flanges with four screw holes, **characterised in that** the external diameter of the valve housing (1) corresponds to the external diameter of the sealing face (17) of the flange (13) with the largest predetermined hole circle (14).

15. Flangeless valve housing according to claim 13 for predetermined flanges which alternately comprise four or eight screw holes, **characterised in that** the external diameter of the valve housing (1) is smaller than the smallest hole circle diameter of the flanges (26; 32) with eight screw holes (28; 34) minus the screw hole diameter.

## Revendications

1. Corps de vanne sans bride destiné à être monté entre deux brides (2 ; 13 ; 26 ; 32 ; 37), qui comportent des trous de vis (11 ; 15 ; 28 ; 34 ; 39) disposés au niveau d'un trou d'axe (10 ; 14 ; 27 ; 33; 38) pour des vis de raccordement (12 ; 16 ; ; 29 ; 35; 10), moyennant quoi le trou d'axe (10 ; 14 ; 27 ; 33; 38) comporte un diamètre qui se trouve dans une plage allant d'un diamètre prédéfini inférieur à un diamètre prédéfini supérieur, et moyennant quoi le corps de vanne (1 ; 25)
comporte, à ses deux extrémités, des surfaces de contact de raccordement (3, 1) et, entre elles, un espace intérieur (5) et
dans l'espace intérieur (5), plusieurs éléments de guidage (6) fixes s'étendant dans le sens de la longueur du corps de vanne (1 ; 25) sont disposés pour le guidage périphérique d'une partie de fermeture, moyennant quoi
au niveau de la circonférence du corps de vanne, des moyens de centrage (19 ; 42) sont disposés avec un nombre d'ergots de centrage (19 ; 42) radiaux adapte au nombre de vis de raccordement (12 ; 16 ; 29 ; 35 ; 40), moyennant quoi le corps de vanne (1 ; 25) peut tourner, de sorte que ces ergots de centrage (19 ; 42) peuvent être amenés au niveau des vis de raccordement (12 ; 16 ; 29 ; 35 ; 40) et, de cette façon, le corps de vanne (1 ; 25) et les brides (2 ; 13 ; 26 ; 32 ; 37) peuvent être alignés dans le même axe,
**caractérisé**
**en ce que** les ergots de centrage (19 ; 42) sont conçus de sorte que le corps de vanne (1 ; 25) et les brides (2 ; 13 ; 26 ; 32 ; 37) peuvent être alignés dans le même axe, pour la plage allant du diamètre prédéterminé le plus petit au diamètre prédéterminé le plus grand du trou d'axe (10 ; 14 ; 27 ; 33 ; 38), par une rotation (WA) du corps de vanne (1 ; 25) qui ne concerne qu'une partie de l'espace (WR) existant dans le sens de rotation des éléments de guidage (6) adjacents, et
**en ce que** les moyens de centrage (19 ; 42) sont fixés dans une position par rapport aux éléments de guidage (6) du corps de vanne (1 ; 25) que le corps de vanne (1 ; 25) peut ainsi être placé entre les brides (2 ; 13 ; 26 ; 32 ; 37) avec un axe de longueur (7) horizontal et un alignement dans le même axe du corps de vanne (1 ; 25) et des brides (2 ; 13 ; 26 ; 32 ; 37), de sorte que les éléments de guidage (6) comportent un espace latéral par rapport à une perpendiculaire (21) divisant l'axe de longueur (7), de sorte qu'au moins deux éléments de guidage (6) amènent la partie de fermeture vers le bas.

2. Corps de vanne sans bride aclon la revendication 1, **caractérisé en ce que** quatre éléments de guidage (6) disposés les uns par rapport aux autres avec le même écart et quatre ergoto de centrage (19 ; 42) disposés les uns par rapport aux autres avec le même écart sont prévus, moyennant quoi les extrémités inférieures des ergots se situent dans la région des éléments de guidage (6).

3. Corps de vanne sans bride selon l'une quelconque des revendications 1 et 2, **caractérisé en ce que** la région utilisant l'alignement des ergots de centrage (19 ; 42) s'étend respectivement sur un angle inscrit (WA) du corps de vanne (1 ; 25), qui correspond à une fraction de l'angle d'espacement (WR) des éléments de guidage (6).

4. Corps de vanne sans bride selon la revendication 3 pour des brides prédéfinies avec quatre trous de vis, **caractérisé en ce que** la région des ergots utilisant l' alignement des ergots de centrage (19) s'étend respectivement sur un angle inscrit (WA) du corps de vanne (1), lequel ne dépasse pas un quart de l'angle d'espacement (WR) des éléments de guidage (6).

5. Corps de vanne sans bride selon la revendication 3 pour des brides prédéfinies, qui comportent alternativement quatre ou huit trous de vis, **caractérisé**
**en ce que**, lors de l'insertion avec l'axe de longueur (7) horizontal, l'extrémité haute d'un ergot de centrage (42) se trouve entre les deux vis de raccordement (29 ; 35 ; 40) supérieures et
**en ce que** la région des ergots utilisant l'alignement des ergots de centrage (42) est conçue pour s'aligner aussi bien au niveau d'une vis de raccordement (40) d'une bride (37) avec quatre trous de vis (39) qu'au niveau d'une vis de raccordement (29 ; 35) d'une bride (26 ; 32) avec huit trous de vie (28 ; 34).

6. Corps de vanne sans bride selon la revendication 5, **caractérisé en ce que** la région des ergots utilisant l'alignement des ergots de centrage (42) s'étend respectivement sur un angle inscrit (WA) du corps de vanne (25), lequel est supérieur à l'angle de décalage (WV) entre le trou de vis (39) d'une bride (37) avec quatre trous de vis (39) et le trou de vis (28 ; 34) suivant d'une bride (26 ; 32) avec huit trous de vis (28 ; 34).

7. Corps de vanne sans bride selon une ou plusieurs des revendications précédentes **caractérisé en ce qu'**au moins un ergot de centrage (19 ; 42) comporte un prolongement (20) adjacent au niveau de la plus grande hauteur d'ergot dans le sens de la circonférence du corps de vanne (1 ; 25) avec une surface (22) dans le sens radial du corps de vanne (1 ; 25).

8. Corps de vanne sans bride selon une ou plusieurs des revendications précédentes, **caractérisé en ce qu'**au moins un ergot de centrage (19 ; 42) comporte un prolongement (20) adjacent au niveau de la plus grande hauteur d'ergot dans le sens de la circonférence du corps de vanne (1 ; 25) avec des moyens de fixation (23) disposés essentiellement de façon radiale par rapport au corps de vanne (1 ; 25) pour un raccordement à la terre et/ou une aide au montage.

9. Corps de vanne sans bride selon l'une des revendications 7 et 8, ou selon les deux, **caractérisé en ce que** la surface (22) du prolongement (20) est formée de façon égale.

10. Corps de vanne sans bride selon l'une des revendications 7 à 9, **caractérisé en ce que** les ergots de centrage (19 ; 42), y compris le prolongement (20), sont disposés les uns par rapport aux autres avec un espace qui est supérieur à l'émule d'espacement (WS) de deux trous de vis (28 ; 34) adjacents d'une bride (26 ; 32) avec huit trous de vis (28 ; 34) en plus du rayon d'un trou de vis (28 ; 34).

11. Corps de vanne sans bride selon une ou plusieurs des revendications précédentes, **caractérisé en ce que** le corps de vanne (1 ; 25) comporte les ergots de centrage (19 ; 42) lui-même.

12. Corps de vanne sans bride selon la revendication 11, **caractérisé**
**en ce que** le corps de vanne (1 ; 25) est en forme de disque et
**en ce que** les ergots de centrage (19 ; 42) et/ou le prolongement (20) sont disposés au centre du corps de vanne (1 ; 25) et comporte une largeur qui propose un support stable.

13. Corps de vanne sans bride selon la revendication 11 ou 12, **caractérisé**
**en ce que** le diamètre extérieur du corps de vanne (1 ; 25) est supérieur au diamètre extérieur de la surface surélevée (8) d'une bride (2 ; 37) avec l'axe de trou (10 ; 38) prédéfini le plus petit et
**en ce que** le corps de vanne (1 ; 25) comporte des cavités (24) internes dans le sens de la longueur dans son diamètre extérieur dans la région des ergots de centrage (19 ; 42) pour les vis de raccordement (12 ; 40) de la bride (2 ; 37) avec un petit trou de vis prédéfini (10 ; 38).

14. Corps de vanne sans bride selon la revendication 13 pour des brides prédéfinies avec quatre trous de vis, **caractérisé en ce que** le diamètre extérieur du corps de vanne (1) correspond au diamètre extérieur de la surface surélevée (17) de la bride (13) avec le trou de vis (14) prédéfini le plus grand.

15. Corps de vanne sans bride selon la revendication 13 pour des brides prédéfinies, qui comportent alternativement quatre ou huit trous de vis, **caractérisé en ce que** le diamètre extérieur du corps de vanne (1) est inférieur au diamètre de l'axe de trou le plus petit de la bride (26 ; 32) avec huit trous de vis (28 ; 34) moins le diamètre du trou de vis.
